# EUROPÄISCHE PATENTSCHRIFT

(11) **EP 0 843 804 B1**
(45) Veröffentlichungstag und Bekanntmachung des Hinweises auf die Patenterteilung: **17.11.1999**
(21) Anmeldenummer: 96922866.7
(22) Anmeldetag: 20.06.1996
(51) Int. Cl.: F28D 17/02, F28F 21/06

(54) **SPEICHERBLOCK FÜR REGENERATIV-WÄRMETAUSCHER**
STORAGE BLOCK FOR REGENERATIVE HEAT EXCHANGERS
BLOC ACCUMULATEUR POUR ECHANGEUR THERMIQUE A REGENERATION

(30) Priorität: 09.08.1995 DE 19529227
(43) Veröffentlichungstag der Anmeldung: 27.05.1998
(73) Patentinhaber: STEAG Aktiengesellschaft, 45128 Essen (DE)
(72) Erfinder: HARTMANN, Uwe, D-45149 Essen (DE); WEILER, Helmut, D-42549 Velbert (DE)
(86) Internationale Anmeldenummer: EP9602680
(87) Internationale Veröffentlichungsnummer: WO9706397

(56) Entgegenhaltungen:
- EP-A- 0 208 913
- EP-A- 0 607 921
- GB-A- 2 170 586
- US-A- 4 020 896
- US-A- 4 615 379

## Beschreibung

Die Erfindung betrifft einen Speicherblock zur Wärmeübertragung zwischen Gasströmen in Regenerativ-Wärmetauschern, mit Speicherelementen, die Heizflächen von Gaskanälen bilden. Ferner betrifft die Erfindung ein Verfahren zur Herstellung eines deratigen Speicherblocks.

Regenerativ-Wärmetauscher werden beispielsweise in Abgasreinigungsanlagen eingesetzt, um das Rohgas vor der Naßwäsche abzukühlen und gleichzeitig mit der gewonnenen Wärme das Reingas hinter der Naßwäsche aufzuwärmen. Durch eine Temperaturerhöhung des Reingases auf Temperaturen oberhalb der Sättigungstemperatur verdampfen die im Reingas enthaltenen Flüssigkeitstropfen. Dadurch kann in Baugruppen, die der Naßwäsche nachgeschaltet sind, die Kondensatbildung und damit die Gefahr der Säurebildung durch die Hydratisierung ggfs. vorhandener Säureanhydrite zu beispielsweise HCL oder HF reduziert werden.

Es sind Speicherblöcke bekannt, die aus einem Stapel von Platten bestehen, die rechteckige Gaskanäle bilden und durch punktförmige Verschweißungen miteinander verbunden sind. Bereits beim Zuschnitt und bei der Montage löst sich ein Teil dieser Verschweißungen. Auch der Aus- und Einbau der Speicherelemente für die regelmäßigen Inspektionen beansprucht den bekannten Speicherblock beträchtlich.

Aufgrund der in dem Gas enthaltenen Tropfen lagern sich an den Heizflächen der Gaskanäle, insbesondere auf den angeströmten Stirnflächen und im Eintrittsbereich bis in eine Tiefe von mehreren Zentimetern, Salze und andere Verunreinigungen ab. Diese Anbackungen werden durch regelmäßige mechanische Abreinigungsvorgänge, zum Beispiel mit Hilfe von Dampf, Luft oder HD-Wasser, entfernt, wobei hohe mechanische Beanspruchungen auftreten. Allerdings zeigen die bisher bekannten Speicherblöcke bereits nach kurzer Betriebszeit dauerhafte Verschmutzungen, die nicht mehr durch die regelmäßigen Abreinigungsvorgänge entfernt werden können. Aus all diesen Gründen ist die Standzeit der bekannten Speicherblöcke relativ niedrig.

Aus der US-A-4,020,896 ist ein Verfahren zur Herstellung von Glaskeramik-Wärmetauschern bekannt, bei dem runde Rohre aus einem Glasmaterial mit Luft oder einem anderen Fluid gefüllt und dann an ihren Enden verschlossen werden. Die geschlossenen Glasrohre werden dicht in einen Rahmen gepackt und über ihre Glastemperatur (ca. 1000 bis 1300°C) erhitzt. Die Rohre dehnen sich dabei unter dem Druck des sich stärker ausdehnenden eingeschlossenen Fluids aus. Aneinandergrenzende Rohre verschmelzen miteinander und kristallisieren zu einer Glaskeramik mit einheitlicher Gitterstruktur. Die Enden der verschmolzenen Glaskeramikrohre werden schließlich mit einer Diamantsäge abgesägt.

Die US-A-4,615,379 beschreibt einen Speicherblock aus in einem Rahmen zusammengehaltenen Kohlenstoffröhren. Die Kohlenstoffröhren werden mit Hilfe von Stegen auseinandergehalten, damit möglichst große Durchflußkanäle zwischen den Kohlenstoffröhren entstehen.

Aus der GB-A-2 170 586 und der EP-A-0 607 921 sind massive Speicherblöcke bekannt, die wabenartige Durchführungen aufweisen. In der GB-A-2 170 586 bestehen diese Speicherblöcke aus Kunststoff und sind Extrusionsverfahren hergestellt. Nachteilhaft an den bekannten massiven Speicherblöcken ist, daß ihre Herstellung mit einer Vielzahl von Waben sehr aufwendig ist. Außerdem sind die massiven Speicherblöcke schwer und schlecht zu handhaben.

Aufgabe der Erfindung ist es, einen der Wärmeübertragung zwischen Gasströmen in einem Regenerativ-Wärmetauscher dienenden Speicherblock zur Verfügung zu stellen, der die Vorteile einfacher und kostengünstiger Herstellung und relativ hoher Standzeiten vereinigt.

Diese Aufgabe wird erfindungsgemäß gelöst durch einen Speicherblock zur Wärmeübertragung zwischen Gasströmen in Regenerativ-Wärmetauschern, mit Speicherelementen, die Heizflächen von Gaskanälen bilden, wobei der Speicherblock ein Bündel von einzelnen Rohren enthält, wobei die Rohre einen runden, ovalen oder einen mehreckigen Querschnitt aufweisen und aus Kunststoff bestehen, und wobei zwischen den einzelnen Rohren Zwickelräume angeordnet sind, und die einzelnen Rohre des Rohrbündels an ihren Außenflächen Kleb-, Schmelzoder Schweißstellen aufweisen, mit denen aneinandergrenzende Rohre miteinander verbunden sind.

Verfahrensmäßig wird die Aufgabe gelöst durch die Merkmale des Anspruchs 12.

Die einzelnen Rohre können sehr dünnwandig hergestellt werden. Somit kann der erfindungsgemäße Speicherblock nicht nur kompakt hergestellt werden, sondern ist auch leicht und einfach zu handhaben. Je nach Anwendung kann die geeignete Anzahl von Einzelrohren in der gewünschten Form miteinander verbunden werden. Das Verkleben, Verschweißen oder Verschmelzen kann ggfs. sogar vor Ort durchgeführt werden. Ein Zuschnitt des Blocks ist in diesem Fall nicht erforderlich. Dadurch wird der Materialbedarf stark reduziert, da Reststücke vermieden werden.

Überraschenderweise hat die Praxis gezeigt, daß bei derartig geformten Speicherelementen kaum dauerhafte Ablagerungen auf den Heizflächen auftreten. Wenn nach langen Betriebszeiten Ablagerungen auftreten, so wachsen diese vorwiegend auf den Stirnflächen. Die Durchströmung der Rohre und die Wärmeübertragung auf die Rohre und von den Rohren werden dabei kaum beeinträchtigt. An den profillosen Innenflächen der Rohre, die eine möglichst glatte Oberfläche aufweisen, tritt ein Anti-Hafteffekt auf, der Ablagerungen entgegenwirkt.

Der Querschnitt der Speicherelemente und die Wabenkonstruktion des Speicherblocks sorgen für eine besonders hohe mechanische Stabilität und Schwingungsfestigkeit. Deshalb kann der Speicherblock den üblichen regelmäßigen mechanischen Abreinigungsvorgängen mit einer praktisch beliebig hohen Wiederholungsfrequenz unterzogen werden, ohne daß eine nennenswerte schädliche Beanspruchung des Speicherblockes durch den Impuls des Abreinigungsmechanismus auftritt. Die hohe mechanische Stabilität verringert zudem die Beschädigungsgefahr der Speicherelemente beim Transport, bei der Montage und bei Inspektionen.

Durch die Verwendung von thermoplastischem Kunststoff, vorzugsweise Polypropylen für die rohrförmigen Speicherelemente können diese durch Extrusion einfach und kostengünstig in großen Mengen hergestellt werden.

Ein bevorzugtes Ausführungsbeispiel der Erfindung ist dadurch gekennzeichnet, daß die Rohre des Rohrbündels an mindestens einer Stirnkante miteinander verweißt sind. Auf dieses Weise kann die mechanische Stabilität und somit die Belastbarkeit des Speicherblocks zusätzlich erhöht werden.

Vorzugsweise ist die Stirnkantenverschweißung durch Trennschweißung hergestellt. Dabei wird der Speicherblock beispielsweise mit Hilfe eines Heizdrahtes oder einer sich durch den Sägevorgang von selbst aufheizenden Säge bei seinem Zuschnitt gleichzeitig an seinen Stirnkanten verschweißt. Der Arbeitsaufwand wird dadurch minimiert.

Eine Weiterbildung der Erfindung ist dadurch gekennzeichnet, daß die Rohre des Rohrbündels an mindestens einer Stirnkante Schmelzwülste aufweisen. Die Schmelzwülste verursachen Strömungswirbel in dem anströmenden Gas, die die Bildung von Ablagerungen behindern. Die Schmelzwülste können beispielsweise bei der Verschweißung der Stirnkanten der Speicherelemente geformt werden.

Bei einer Weiterbildung der Erfindung verschließen die Schmelzwülste Zwickelräume des Rohrbündels oder engen sie ein. Auf diese Weise können bei Rohrbündeln, die z.B. aus runden Rohren bestehen, die dauerhaften Ablagerungen noch stärker reduziert werden.

Nach einem weiteren vorteilhaften Merkmal weisen die Rohre des Rohrbündels eine Wandstärke zwischen 0,1 und 2 mm, vorzugsweise von 0,15 bis 0,25 mm auf. Dadurch wird auf der einen Seite der Materialbedarf minimiert, und auf der anderen Seite ermöglicht das geringe Gewicht eine einfache Handhabung des Speicherblocks bei Transport, Zuschnitt und Montage.

Es hat sich bewährt, daß die Rohre des Rohrbündels einen Querschnitt von 20 bis 400 mm², vorzugsweise von 80 bis 200 mm², aufweisen. Bei diesem Querschnitt findet eine gute Wärmeübertragung statt, und zwar bei begrenzter Anzahl von Speicherelementen und somit begrenzten Anschaffungskosten und einer verhältnismäßig geringen Niederschlagsrate von dauerhaften Verunreinigungen auf den Stirnflächen.

Des weiteren empfiehlt es sich, daß die Länge der Rohre des Rohrbündels 100 - 400 mm, vorzugsweise weniger als 300 mm beträgt. Die Praxis hat gezeigt, daß bei dieser Auslegung gute Funktionseigenschaften bei relativ geringem Platz- und Materialbedarf erzielt werden können.

Eine bevorzugte Verwendung des Speicherblocks ist die Vorwärmung von in Rauchgaswaschanlagen abgekühlten Gasen. Vorzugsweise ist dabei mit dem als Rohrbündel ausgebildeten Speicherblock wenigstens ein weiterer Speicherblock aus metallischen, keramischen und/oder beschichteten Speicherelementen in Reihe geschaltet. Da Kunststoffrohre besser von Ablagerungen gereinigt werden können und an diesen keine Korrosion auftritt, hat es sich in der Praxis als besonders zweckmäßig erwiesen, in denjenigen Bereichen, in denen besonders starke Anbackungen auftreten, die erfindungsgemäßen Speicherblöcke statt der konventionellen Speicherblöcke zu verwenden. Durch die Kombination mit den konventionellen Speicherblöcken gelingt es, einen hohen Wirkungsgrad des Wärmetauschers ohne nennenswerten zusätzlichen Platzbedarf bei hohen Standzeiten zu erzielen.

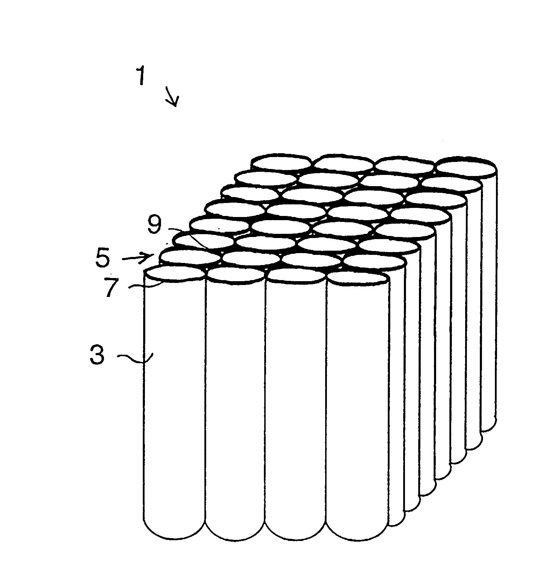

Im folgenden wird die Erfindung anhand eines in der Zeichnung dargestellten Ausführungsbeispiels näher erläutert.

Die Zeichnung zeigt eine perspektivische Ansicht eines erfindungsgemäßen Speicherblocks 1. Der Speicherblock besteht aus einer Vielzahl geradliniger Rohre 3, die in Reihen zu einem dichten Speicherblock gepackt sind. Die Rohre sind durch thermische Verschweißung ihrer Außenflächen direkt miteinander verbunden. An einer Stirnkante 5 weisen die Rohre ringförmige Schmelzwülste 7 auf. Diese Schmelzwülste 7 sind durch Trennverschweißungen mit Hilfe eines Heizdrahtes gebildet worden. Zwickelräume 9 zwischen den Rohren 3 sind durch diese Schmelzwülste eingeengt und zum Teil vollständig verschlossen. Die Schmelzwülste 7 erhöhen die mechanische Festigkeit der Wabenkonstruktion und dienen außerdem der Erzeugung von Verwirbelungen in den von außen eintretenden Gasströmen. Damit reduzieren sie auch dauerhafte Anbackungen auf den Heizflächen.

Für den Fachmann sind zahlreiche Variationen der Erfindung möglich. Der Querschnitt der Speicherelemente kann ein beliebiges Vieleck darstellen. Die Rohre können geradlinig oder gebogen sein. Die Schmelzwülste können sowohl auf einer Seite als auch an beiden Seiten der Rohre vorgesehen werden. Anstelle der Kunststoffrohre können Keramikrohre oder mit einem geeigneten Material beschichtete Rohre verwendet werden. Auch können die Rohre zur Vergrößerung ihrer Zwischenräume mit Stegen voneinander auf Abstand gehalten werden. Selbstverständlich können bei Bedarf auch mehrere Speicherblöcke hintereinander geschaltet werden. In diesem Fall müssen die aneinandergrenzenden Speicherblöcke bspw. ausgerichtet und durch Verschweißen doer Vermelzen ihrer Stirnflächen zusammengehalten werden.

## Patentansprüche

1. Speicherblock (1) zur Wärmeübertragung zwischen Gasströmen in Regenerativ-Wärmetauschern, mit Speicherelementen, die Heizflächen von Gaskanälen bilden,
wobei der Speicherblock ein Bündel von einzelnen Rohren (3) enthält,
wobei die Rohre (3) einen runden, ovalen oder einen mehreckigen Querschnitt aufweisen und aus Kunststoff bestehen, und
wobei zwischen den einzelnen Rohren Zwickelräume (9) angeordnet sind, und die einzelnen Rohre des Rohrbündels an ihren Außenflächen Kleb-, Schmelz- oder Schweißstellen (7) aufweisen, mit denen aneinandergrenzende Rohre miteinander verbunden sind.

2. Speicherblock nach Anspruch 1, dadurch gekennzeichnet, daß die Rohre (3) des Rohrbündels aus einem thermoplastischen Kunststoff, vorzugsweise aus Polypropylen hergestellt werden.

3. Speicherblock nach Anspruch 1 oder 2, dadurch gekennzeichnet, daß die Rohre (3) des Rohrbündels an mindestens einer Stirnkante (5) miteinander verschweißt sind.

4. Speicherblock nach Anspruch 3, dadurch gekennzeichnet, daß die Stirnkantenverschweißung (7) durch Trennschweißung hergestellt ist.

5. Speicherblock nach einem der Ansprüche 1 bis 4, dadurch gekennzeichnet, daß die Rohre (3) des Rohrbündels an mindestens einer Stirnkante (5) Schmelzwülste (7) aufweisen.

6. Speicherblock nach Anspuch 5, dadurch gekennzeichnet, daß die Schmelzwülste (7) die Zwickelräume (9) des Rohrbündels einengen oder verschließen.

7. Speicherblock nach einen der Ansprüche 1 bis 6, dadurch gekennzeichnet, daß die Rohre (3) des Rohrbündels eine Wandstärke zwischen 0,1 und 2 mm, vorzugsweise von 0,15 bis 0,25 mm, aufweisen.

8. Speicherblock nach einen der Ansprüche 1 bis 7, dadurch gekennzeichnet, daß die Rohre (3) des Rohrbündels einen Querschnitt von 20 bis 400 mm², vorzugsweise von 80 bis 200 mm², aufweisen.

9. Speicherblock nach einem der Ansprüche 1 bis 8, dadurch gekennzeichnet, daß die Länge der Rohre (3) des Rohrbündels 100 bis 400 mm, vorzugsweise < 300 mm beträgt.

10. Verwendung des Speicherblocks nach einem der Ansprüche 1 bis 9, zur Vorwärmung von in Rauchgaswaschanlagen abgekühlten Gasen.

11. Verwendung des Speicherblocks nach Anspruch 10, dadurch gekennzeichnet, daß mit dem als Rohrbündel ausgebildeten Speicherblock wenigstens ein weiterer Speicherblock aus metallischen, keramischen und/oder beschichteten Speicherelementen in Reihe geschaltet ist.

12. Verfahren zur Herstellung eines Speicherblocks zur Wärmeübertragung zwischen Gasströmen in Regenerativ-Wärmetauschern,
wobei mehrere Rohre aus Kunststoff mit einem runden, ovalen oder einem mehreckigen Querschnitt zu einem Bündel derart zusammengefaßt werden, daß Zwickelräume zwischen den einzelnen Rohren verbleiben,
wobei die Rohre des Rohrbündels an ihren Außenflächen miteinander verklebt, verschmolzen oder verschweißt werden, und
wobei die Rohre beim Verkleben, Verschmelzen oder Verschweißen an ihren Enden offengehalten werden.

13. Verfahren nach Anspruch 12, dadurch gekennzeichnet, daß Rohre des Rohrbündels aus einem thermoplastischen Kunststoff, vorzugsweise aus Polypropylen hergestellt werden.

14. Verfahren nach Anspruch 12 oder 13, dadurch gekennzeichnet, daß die Rohre des Rohrbündels an mindestens einer Stirnkante miteinander verschweißt werden.

15. Verfahren nach Anspruch 14, dadurch gekennzeichnet, daß die Stirnkantenverschweißung durch Trennschweißung hergestellt wird.

16. Verfahren nach einem der Ansprüche 12 bis 15, dadurch gekennzeichnet, daß die Rohre des Rohrbündels an mindestens einer Stirnkante derart geschmolzen werden, daß Schmelzwülste gebildet werden.

## Claims

1. Storage block (1) for heat transfer between gas flows in regenerative heat exchangers, with storage elements which form heat surfaces of gas ducts, wherein the storage block contains a bundle of individual tubes (3), wherein the tubes (3) have a round, an oval or a polygonal cross-section and consist of synthetic material and wherein wedge spaces (9) are arranged between the individual tubes and the individual tubes of the tube bundle have gluing, fusing or welding locations (7), by which mutually adjacent tubes are connected together, at their outer surfaces.

2. Storage block according to claim 1, characterised in that the tubes (3) of the tube bundle are made of a thermoplastic synthetic material, preferably of polypropylene.

3. Storage block according to claim 1 or 2, characterised in that the tubes (3) of the tube bundle are welded together at at least one end edge (5).

4. Storage block according to claim 3, characterised in that the end edge welding (7) is produced by separation welding.

5. Storage block according to one of claims 1 to 4, characterised in that the tubes (3) of the tube bundle have fusion beads (7) at at least one end edge (5).

6. Storage block according to claim 5, characterised in that the fusion beads (7) constrict or close the wedge spaces (9) of the tube bundle.

7. Storage block according to one of claims 1 to 6, characterised in that the tubes (3) of the tube bundle have a wall thickness between 0.1 and 2 mm, preferably 0.15 to 0.25 mm.

8. Storage block according to one of claims 1 to 7, characterised in that the tubes (3) of the tube bundle have a cross-section of 20 to 400 mm², preferably of 80 to 200 mm².

9. Storage block according to one of claims 1 to 8, characterised in that the length of the tubes (3) of the tube bundle amounts to 100 to 400 mm, preferably less than 300 mm.

10. Use of the storage block according to one of claims 1 to 9, for the preheating of gases cooled in flue gas cleaning plants.

11. Use of the storage block according to claim 10, characterised in that at least one further storage block of metallic, ceramic and/or coated storage elements is connected in series with the storage block constructed as a tube bundle.

12. Method of manufacturing a storage block for heat transfer between gas flows in regenerative heat exchangers, wherein several tubes of synthetic material with a round, an oval or a polygonal cross-section are combined into a bundle in such a manner that wedge spaces are left between the individual tubes, wherein the tubes of the tube bundle are glued, fused or welded together at their outer surfaces and wherein the tubes are kept open at their ends during the gluing, fusing or welding.

13. Method according to claim 12, characterised in that the tubes of the tube bundle are made of a thermoplastic synthetic material, preferably of polypropylene.

14. Method according to claim 12 or 13, characterised in that the tubes of the tube bundle are welded together at at least one end edge.

15. Method according to claim 14, characterised in that the end edge welding is produced by separation welding.

16. Method according to one of claims 12 to 15, characterised in that the tubes of the tube bundle are fused at at least one end edge in such a manner that fusion beads are formed.

## Revendications

1. Bloc de stockage (1) pour la transmission de la chaleur entre des flux de gaz dans des échangeurs de chaleur à régénération, avec des éléments de stockage qui forment des surfaces chauffantes de canaux de gaz,
où le bloc de stockage comporte un faisceau de tubes individuels (3),
où les tubes (3) ont une section transversale ronde, ovale ou polygonale et sont réalisés en matière synthétique et
où sont disposés entre les différents tubes des espaces formant gousset (9), et les différents tubes du faisceau de tubes présentent à leurs faces extérieures des endroits de colle, de fusion ou de soudure (7) au moyen desquels des tubes avoisinants sont reliés les uns aux autres.

2. Bloc de stockage selon la revendication 1, caractérisé en ce que les tubes (3) du faisceau de tubes sont réalisés en une matière synthétique thermoplastique. de préférence en polypropylène.

3. Bloc de stockage selon la revendication 1 ou 2, caractérisé en ce que les tubes (3) du faisceau de tubes sont soudés les uns aux autres à au moins une arête frontale (5).

4. Bloc de stockage selon la revendication 3, caractérisé en ce que la soudure (7) aux arêtes frontales est réalisée par soudure à séparation.

5. Bloc de stockage selon l'une des revendications 1 à 4, caractérisé en ce que les tubes (3) du faisceau de tubes présentent à au moins une arête frontale (5) des bourrelets de fusion (7).

6. Bloc de stockage selon la revendication 5, caractérisé en ce que les bourrelets de fusion (7) font rétrécir ou ferment des espaces formant gousset (9) du faisceau de tubes.

7. Bloc de stockage selon l'une des revendications 1 à 6, caractérisé en ce que les tubes (3) du faisceau de tubes ont une épaisseur de paroi entre 0,1 et 2 mm, de préférence de 0,15 à 0,25 mm.

8. Bloc de stockage selon l'une des revendications 1 à 7, caractérisé en ce que les tubes (3) du faisceau de tubes présentent une section transversale de 20 à 400 mm², de préférence de 80 à 200 mm².

9. Bloc de stockage selon l'une des revendications 1 à 8, caractérisé en ce que la longueur des tubes (3) du faisceau de tubes est de 100 à 400 mm, de préférence < 300 mm.

10. Utilisation du bloc de stockage selon l'une des revendications 1 à 9, pour le préchauffage de gaz refroidis dans des installations de lavage des gaz de fumée.

11. Utilisation du bloc de stockage selon la revendication 10, caractérisée en ce qu'il est monté en série avec le bloc de stockage réalisé comme faisceau de tubes au moins un bloc de stockage additionnel en éléments de stockage métalliques, céramiques et/ou recouverts.

12. Procédé de fabrication d'un bloc de stockage pour la transmission de la chaleur entre des flux de gaz dans des échangeurs de chaleur à régénération,
où plusieurs tubes en matière synthétique d'une section transversale ronde, ovale ou polygonale sont réunis en un faisceau de façon que des espaces formant gousset subsistent entre les différents tubes,
où les tubes du faisceau de tubes, à leurs faces extérieures, sont assemblés par collage, fusion ou soudure et
où les tubes, lors du collage, de la fusion ou de la soudure, sont maintenus ouverts à leurs extrémités.

13. Procédé selon la revendication 12, caractérisé en ce que les tubes du faisceau de tubes sont réalisés en une matière synthétique thermoplastique, de préférence en polypropylène.

14. Procédé selon la revendication 12 ou 13, caractérisé en ce que les tubes du faisceau de tubes sont soudés les uns aux autres à au moins une arête frontale.

15. Procédé selon la revendication 14, caractérisé en ce que la soudure des arêtes frontales est réalisée par une soudure à séparation.

16. Procédé selon l'une des revendications 12 à 15, caractérisé en ce que les tubes du faisceau de tubes sont amenés à fondre à au moins une arête frontale de façon à former des bourrelets de fusion.
